# EUROPEAN PATENT APPLICATION

(11) **EP 1 976 281 A2**
(43) Date of publication of application: **01.10.2008**
(21) Application number: 08004566.9
(22) Date of filing: 12.03.2008
(51) Int. Cl.: H04N 5/445

(54) **Program table displaying apparatus and program table displaying method**

(30) Priority: 30.03.2007 JP 2007095339
(71) Applicant: Kabushiki Kaisha Toshiba, Minato-ku, Tokyo 105-8001 (JP)
(72) Inventor: Yamaguchi, Takanori, Intellectual Property Division, Tokyo 105-8001 (JP)
(74) Representative: HOFFMANN EITLE

(57) **Abstract**

A program table displaying apparatus is provided with a preparing section (62) configured to prepare an electronic program table describing a program name and an explanatory text thereof for each program based upon acquired program information, a setting section (62e) configured to set a display aspect of the program name and the explanatory text thereof to the prepared electronic program table, and a displaying section (14, 55, 58, 59, 62) configured to display the electronic program table prepared by the preparing section (62) based upon the set display aspect such that the program name and the explanatory text thereof are displayed different in display aspect.

## Description

The present invention relates to a program table displaying apparatus and a program table displaying method suitably applied to use in, for example, a digital television broadcast receiver.

As is well known, recently, digital television broadcasting has been promoted. For example, besides digital direct broadcasting by satellite, digital terrestrial broadcasting has started in Japan.

In a digital broadcast receiver which receives such a digital television broadcasting service, an electronic program table is prepared based upon electronic program guide (EPG) information acquired from broadcast signals and is video-displayed on a screen. A user can select his/her desired program from the electronic program table video-displayed to perform looking and listening of the selected program or reservation for recording thereof.

Currently, in the digital television broadcasting service, information which allows preparation of an electronic program table up to a week ahead corresponding to respective ones of many channels to be broadcasted is included in the EPG information. In case of radio broadcasting service, information which allows preparation of an electronic program table up to a three days ahead corresponding to respective channels to be broadcasted is included in the EPG information.

Therefore, in the digital broadcast receiver, since all programs on the whole electronic program table cannot be displayed within a limited screen simultaneously, display of the electronic program table is performed on the screen in a partially switching manner thereof. However, even if such a display aspect is adopted, since the electronic program table is displayed within the screen in a considerably overcrowded manner, it is important to perform improvement to display easily viewable for a user.

JP-A-2007-019927 discloses such a configuration that the genre of a program to be highlighted on a genre selection screen for selecting the genre of a program to be highlighted on an electronic program table is selected, and when a program introduction column of a genre coinciding with the selected genre is present on the electronic program table, the electronic program table having the program introduction column highlighted is displayed.

In view of these circumstances, the present invention has been made and an object thereof is to provide a program table displaying apparatus and a program table displaying method which allow program table display effective and easily viewable for a user by performing display or non-display of a program name on an electronic program table and an explanatory text thereof based upon a display aspect set by the user in advance.

According to one aspect of the present invention, there is provided a program table displaying apparatus comprising: an acquiring section configured to acquire program information, a preparing section configured to prepare an electronic program table describing a program name and an explanatory text thereof for each program based the program information acquired by the acquiring section, a setting section configured to set a display aspect for one of the program name and the explanatory text thereof to the electronic program table prepared by the preparing section, and a displaying section configured to display the electronic program table prepared by the preparing section based on aspect set by the setting section such that the program name and the explanatory text are different in display aspect.

According to another aspect of the present invention, there is provided a program table displaying method comprising: acquiring program information, preparing an electronic program table describing a program name and an explanatory text thereof for each program based the program information acquired, setting a display aspect for one of the program name and the explanatory text to the electronic program table prepared, and displaying the electronic program table based on display aspect set such that the program name and the explanatory text are different in display aspect.

The invention can be more fully understood from the following detailed description when taken in conjunction with the accompanying drawings, in which:
FIG. 1 is a diagram showing one embodiment of the present invention, for briefly explaining an appearance of a digital television broadcast receiver and one example of a network system configured to comprise the digital television broadcast receiver mainly;
FIG. 2 is a block configuration diagram for explaining a main signal processing system of the digital television broadcast receiver in the embodiment;
FIG. 3 is an appearance view for explaining a remote controller of the digital television broadcast receiver in the embodiment;
FIG. 4 is a diagram for explaining one example of an electronic program table displayed by the digital television broadcast receiver in the embodiment;
FIG. 5 is a diagram showing one program column on the electronic program table in the embodiment for explaining a display aspect where a program name and an explanatory text thereof have been made different in font;
FIG. 6 is a flowchart for explaining a display operation when a program name and an explanatory text thereof have been made different in font in the embodiment;
FIG. 7 is a diagram showing one program column on the electronic program table in the embodiment for explaining a display aspect where a program name and an explanatory text thereof have been made different in font;
FIG. 8 is a flowchart for explaining a display operation when the program name and the explanatory text thereof have been made different in font color in the embodiment;
FIG. 9 is a diagram showing one program column on the electronic program table for explaining a display aspect where a program name and an explanatory text thereof have been made different in font size in the embodiment;
FIG. 10 is a flowchart for explaining a display operation when a program name and an explanatory text thereof have been made different in font size in the embodiment;
FIG. 11 is a diagram showing one program column on the electronic program table for explaining a display aspect where a program name and an explanatory text thereof have been made different in font background color in the embodiment;
FIG. 12 is a flowchart for explaining a display operation when a program name and an explanatory text thereof have been made different in font background color in the embodiment;
FIG. 13 is a flowchart for explaining an operation for display-controlling a program explanatory text in the embodiment;
FIG. 14 is a flowchart for explaining an operation for display-controlling a program explanatory text according to a broadcasting slot in the embodiment;
FIG. 15 is a flowchart for explaining an operation for display-controlling a program explanatory text according to a genre in the embodiment;
FIG. 16 is a flowchart for explaining an operation for display-controlling a program explanatory text according to a service in the embodiment;
FIG. 17 is a flowchart for explaining an operation for display-controlling a program explanatory text according to a media type in the embodiment;
FIG. 18 is a flowchart for explaining an operation for display-controlling a program explanatory text according to a keyword in the embodiment; and
FIG. 19 is a flowchart for explaining an operation for display-controlling a program explanatory text according to parental lock in the embodiment.

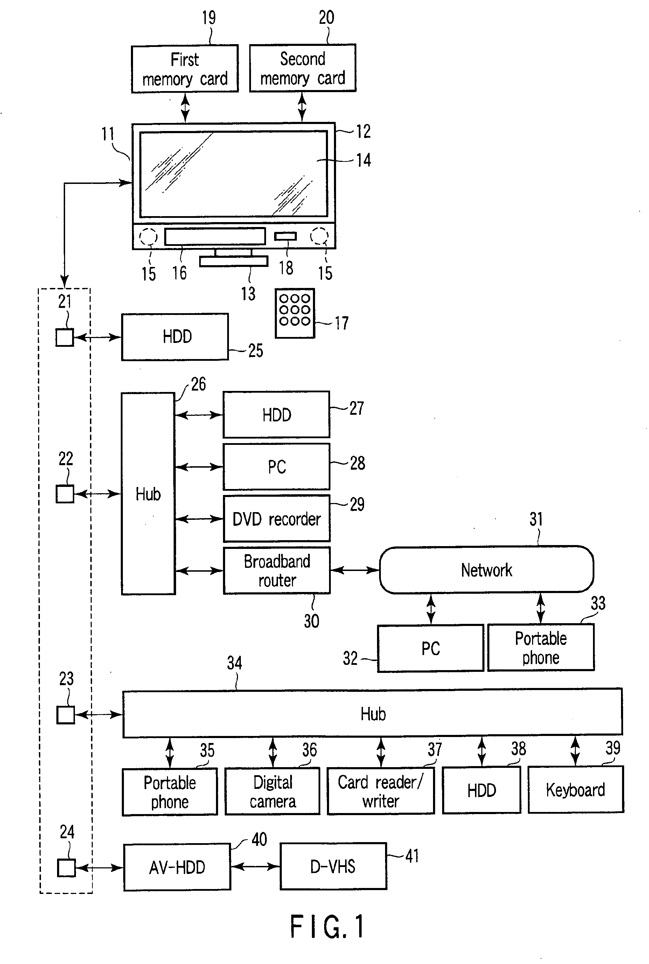

An embodiment of the present invention will be explained in detail below with reference to the drawings. FIG. 1 briefly shows an appearance of a digital television broadcast receiver 11 explained in the embodiment and one example of a network system configured to comprise the digital television broadcast receiver 11 mainly

That is, the digital television broadcast receiver 11 mainly comprises a thin-type cabinet 12 and a supporting stand 13 supporting the cabinet 12 in a standing manner. The cabinet 12 is provided with a video display device 14 which is a flat panel type display including, for example, a liquid crystal display panel or the like, a pair of speakers 15, an operation section 16, a light receiving section 18 receiving operation information transmitted from a remote controller 17, and the like.

For example, a first memory card 19, such as a Secure Digital (SD) memory card, a multimedia card (MMC), and a memory stick can be attached to and detached from the digital television broadcast receiver 11, and recording and reproducing of information such as a program or a photograph to and from the first memory card 19 can be performed.

Further, a second memory card (integrated circuit [IC] card) 20 in which contract information and the like have been recorded can be attached to and detached from the digital television broadcast receiver 11. Reproduction of the contract information from the second memory card 20 can be performed.

The digital television broadcast receiver 11 is provided with a first local area network (LAN) terminal 21, a second LAN terminal 22, a Universal Serial Bus (USB) terminal 23, and an Institute of Electrical and Electronics Engineers (IEEE) 1394 terminal 24.

The first LAN terminal 21 of these terminals is used as a LAN-compliant HDD exclusive port, and it is used for recording and reproducing information to and from a LAN-compliant hard disk drive (HDD) 25 which is connected network attached storage (NAS) by Ethernet (registered trademark).

By providing the first LAN terminal 21 as the LAN-compliant HDD exclusive port in this manner, information recording of a program with high-definition picture quality to the HDD 25 can be performed stably without being influenced by another network environment, a network use status, and the like.

The second LAN terminal 22 is used as a common LAN-compliant port using Ethernet (registered trademark), it is connected with devices such as a LAN-compliant HDD 27, a PC (personal computer) 28, or a DVD (digital versatile disk) recorder 29 with a built-in HDD having a digital broadcast receiving function, for example, via a hub 26, and it is used for information transmission between the second LAN terminal 22 and these devices.

Further, the second LAN terminal 22 is connected to a network 31, for example, Internet, via a broadband router 30 connected to the hub 26, and it is used for performing information transmission with a PC 32 or a mobile phone 33, or the like via the network 31.

The USB terminal 23 is used as a common USB-compliant port, it is connected with USB devices such as a mobile phone 35, a digital camera 36, a card reader/writer 37 to a memory card, a HDD 38, or a keyboard 39, for example, via a hub 34, and it is used for performing information transmission between the same and the USB devices.

Further, the IEEE 1394 terminal 24 is serially connected with an AV (audio video)-HDD 40 and a D (digital)-VHS (video home system) 41, each having a digital broadcast receiving function, and the like, and it is used for performing information transmission between the same and these devices.

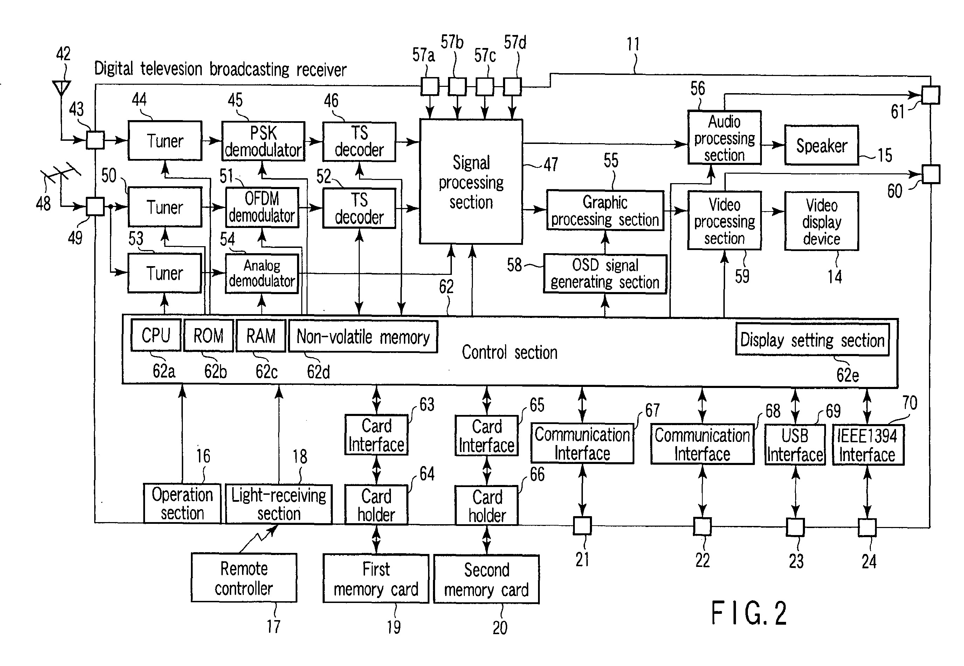

FIG. 2 shows a main signal processing system in the abovementioned digital television broadcast receiver 11. That is, a digital direct broadcast satellite (DBS) signal received by an antenna 42 for DBS reception is supplied to a digital DBS tuner 44 via an input terminal 43 so that a broadcast signal on a desired channel is selected.

The broadcast signal selected by the tuner 44 is supplied to a phase shift keying (PSK) demodulator 45 so that a transport stream (TS) is demodulated. After the TS is supplied to a TS decoder 46 to be decoded to digital video signal, an audio signal, and the like, these signals are outputted to a signal processing section 47.

A digital terrestrial television broadcast signal received by an antenna 48 for terrestrial wave broadcasting reception is supplied to a tuner 50 for terrestrial digital broadcasting via an input terminal 49, so that a broadcast signal on a desired channel is selected.

The broadcast signal selected by the tuner 50 is supplied to an orthogonal frequency division multiplexing (OFDM) demodulator 51 so that the TS is demodulated. After the TS is supplied to a TS decoder 52 to be decoded to a digital video signal and an audio signal, these signals are outputted to the signal processing section 47.

The analog terrestrial television broadcast signal received by the antenna 48 for terrestrial wave broadcasting reception is supplied to a tuner 53 for analog terrestrial broadcasting via the input terminal 49 so that a broadcast signal on a desired channel is selected. After the broadcast signal selected by the tuner 53 is supplied to an analog demodulator 54 to be demodulated to an analog video signal and an analog audio signal, these signals are outputted to the abovementioned signal processing section 47.

Here, the signal processing section 47 selectively performs a predetermined digital signal processing to the digital video signal and digital audio signal supplied from the TS decoders 46 and 52, respectively, to output them to a graphic processing section 55 and an audio processing section 56.

The abovementioned signal processing section 47 is connected with a plurality of (four in the illustrated embodiment) input terminals 57a, 57b, 57c, and 57d. The input terminals 57a to 57d can be inputted with analog video signal and analog audio signal from outside of the digital television broadcast receiver 11.

After the signal processing section 47 selectively digitizes analog video signals and analog audio signals supplied from the analog demodulator 54 and the input terminals 57a to 57d, respectively, to perform predetermined digital signal processings to the digitized video signals and audio signals, it outputs them to the graphic processing section 55 and the audio processing section 56.

The graphic processing section 55 of these sections 55 and 56 has a function of superimposing an on-screen display (OSD) signal produced at an OSD signal producing section 58 on a digital video signal supplied from the signal processing section 47 to output the superimposed signal. The graphic processing section 55 can selectively output an output video signal of the signal processing section 47 and an output OSD signal of the OSD signal producing section 58 and can combine both the outputs so as to configure respective halves of a screen and output them.

The digital video signal outputted from the graphic processing section 55 is supplied to a video processing section 59. After the video processing section 59 converts the inputted digital video signal to an analog video signal with a format displayable by the video display device 14, it outputs the same to video display device 14 to cause the video display device 14 to perform video-display and derives the same to the outside via an output terminal 60.

After the abovementioned audio processing section 56 converts the inputted digital audio signal to an analog audio signal reproducible in the speaker 15, it outputs the signal to the speaker 15 to cause the speaker 15 to reproduce audio and derives the same to the outside via an output terminal 61.

Here, all actions of the digital television broadcast receiver 11 including the various receiving actions mentioned above are generally controlled by a control section 62. The control section 62 incorporates a central processing unit (CPU) 62a therein, and it receives operation information from the operation section 16 or receives operation information fed from the remote controller 17 and received via the light receiving section 18 to control respective sections such that these operation contents are reflected, respectively.

In this case, the control section 62 mainly utilizes a read-only memory (ROM) 62b storing a control program executed by the CPU 62a, a random access memory (RAM) 62c for providing a work area to the CPU 62a, and a non-volatile memory 62d in which various set information, control information, and the like are stored.

The control section 62 is connected to a card holder 64 in which the first memory card 19 can be loaded via a card interface 63. Thereby, the control section 62 can perform information transmission between the same and the first memory card 19 loaded in the card holder 64 via the card interface 63.

Further, the control section 62 is connected to a card holder 66 in which the second memory card 20 can be loaded via a card interface 65. Thereby, the control section 62 can perform information transmission between the same and the second memory card 20 loaded in the card holder 66 via the card interface 65.

The control section 62 is also connected to the first LAN terminal 21 via a communication interface 67. Thereby, the control section 62 can perform information transmission between the same and the LAN-compliant HDD 25 connected to the first LAN terminal 21 via the communication interface 67. In this case, the control section 62 has a Dynamic Host Configuration Protocol (DHCP) sever function and allocates an Internet Protocol (IP) address to the LAN-compliant HDD 25 connected to the first LAN terminal 21 to control the LAN-compliant HDD 25.

Further, the control section 62 is further connected to the second LAN terminal 22 via a communication interface 68. Thereby, the control section 62 can perform information transmission between the same and respective devices (see FIG. 1) connected to the second LAN terminal 22 via the communication interface 68.

The control section 62 is also connected to the USB terminal 23 via a USB interface 69. Thereby, the control section 62 can perform information transmission between the same and respective devices (see FIG. 1) connected to the USB terminal 23 via the USB interface 69.

The control section 62 is further connected to the IEEE 1394 terminal 24 via an IEEE 1394 interface 70. Thereby, the control section 62 can perform information transmission between the same and respective devices (see FIG. 1) connected to the IEEE 1394 terminal 24 via the IEEE 1394 interface 70.

The control section 62 is provided with a display setting section 62e. The display setting section 62e has a function of displaying a setting menu through which a user can change a display aspect of an electronic program table displayed on the video display device 14. A user can change a display aspect of a program name of each program and an explanatory text thereof or can set non-display of an explanatory text based upon the display aspect set according to an operation of the operation section 16 or the remote controller 17 on the setting menu performed by a user, which will be explained in detail later.

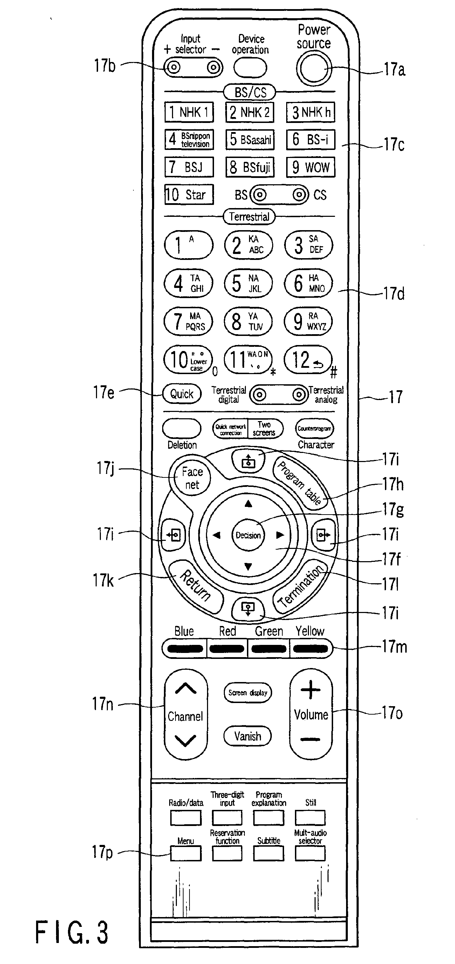

FIG. 3 shows an appearance of the abovementioned remote controller 17. The remote controller 17 is mainly provided with a power source key 17a, an input selector key 17b, a direct selection key 17c of a digital DBS channel, a direct selection key 17d of a terrestrial wave broadcasting channel, a quick key 17e, a cursor key 17f, a decision key 17g, a program table key 17h, a page selector key 17i, a face net (navigation) key 17j, a return key 17k, a termination key 171, color keys 17m of blue, red, green, and yellow, a channel up and down key 17n, a volume adjusting key 17o, a menu key 17p, and the like.

Here, in the digital television broadcast receiver 11, the electronic program table can be displayed on the video display device 14 according to an operation of the program table key 17h on the remote controller 17 performed by a user.

The electronic program table is prepared based upon EPG information which is program information which has been acquired via broadcast signal, a network or the like in advance, and all program tables up to a week ahead are prepared and displayed on the video display device 14 in case of television broadcasting service.

However, all programs on the prepared electronic program table corresponding to one week are not displayed in a lump on the video display device 14, and a fixed region comprising a predetermined number of channels and a predetermined time and date range is displayed on the video display device 14.

A user can view and recognize a desired region within the electronic program table by scrolling the electronic program table on the screen of the video display device 14 or performing switching among regions of the electronic program table for each one screen of the video display device 14.

Incidentally, when the user operates the program key 17h on the remote controller 17, a region of the electronic program table to be first displayed on the video display device 14 is determined based upon the last conditions such as the channel or the time and date displayed previously.

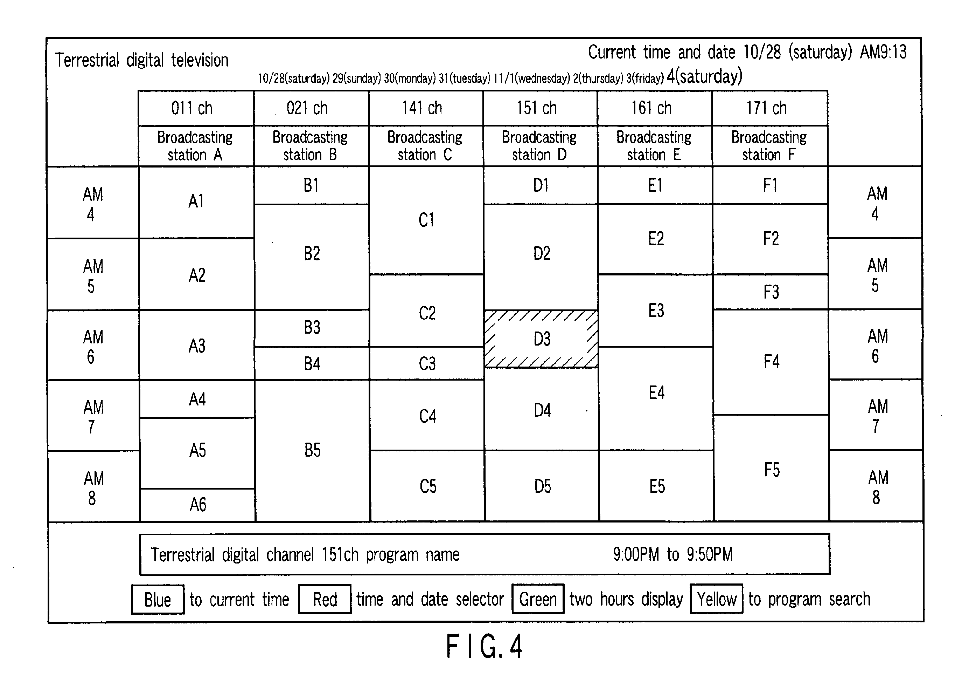

FIG. 4 shows one example of a display aspect of the electronic program table displayed on the video display device 14. On the electronic program table, a horizontal direction configures a channel axis on which a plurality of (six in the illustrated example) broadcasting stations (channels) are arranged and a vertical direction configures a time axis corresponding to a time range of several hours (five hours in the illustrated example), where programs are displayed.

That is, the electronic program table has six program display columns arranged in the horizontal direction corresponding to six broadcasting stations (channels) at its central region. The six program display columns includes channel numbers 011, 021, 141, 151, 161, and 171, broadcasting station names A, B, C, D, E, and F, program columns A1 to A6, B1 to B5, C1 to C5, D1 to D5, E1 to E5, and F1 to F5 corresponding to the respective programs described.

On the electronic program table, display "Terrestrial Digital Television" showing that a kind of broadcasting currently received is terrestrial digital television broadcasting service, display "current time and date 10/28 (Saturday) 9:13 AM" showing that current time and date is 9:13 AM on 28 October (Saturday), and display showing a range of days (days of the week) of a displayable electronic program table are performed on an upper section in the figure.

That is, since the current time and date is 9:13 AM on 28 October (Saturday), programs from 9 AM on 28 October (Saturday) up to 8 AM range (before 9 AM) on 4 November (Saturday) which is a weak ahead from now are produced on the electronic program table. As the range of days (days of a week) of a displayable electronic program table, days (days of a week) up to a week ahead including a current day (a day of a week), namely, eight days comprising 10/28 (Saturday), 29 (Sunday), 30 (Monday), 31 (Tuesday), 11/1 (Wednesday), 2 (Thursday), 3 (Friday), 4 (Saturday) are displayed in a sequential order. In this case, characters [4 (Saturday)] showing a day (a day of a week) of the electronic program table being currently displayed are displayed larger than characters showing other days (days of a week).

On the electronic program table, regarding a program (indicated on the electronic program table by a cursor) being currently selected, the kind of a broadcast (terrestrial digital broadcast), a channel number (151 channel), a program name, a broadcasting time (9:00 AM to 9:50 AM), and the like are displayed on a lower section in the figure. In this case, such a fact that a display region of a program column D3 corresponding to a program being currently selected within the electronic program table is displayed with a color different from a color of display regions of the other programs is indicated by the cursor, and this fact is expressed by surrounding the display region with hatching in FIG. 4.

Further, regions for sectioning a time range corresponding to five hours to one hour ranges in a descending manner to display them are provided on the left side and the right side on the electronic program table. In FIG. 4, programs corresponding to five hours showing 4 AM range, 5 AM range, 6 AM range, 7 AM range, and 8 AM range are displayed in a descending manner in FIG. 4.

Colors corresponding to respective colors (blue, red, green, and yellow) of the color keys 17m on the remote controller 17 are displayed on a lower section in a figure on the electronic program table, and when a color key 17m with one color is operated, a function corresponding to the color to be realized is displayed.

The electronic program table can be selectively scrolled vertically and horizontally by operating the cursor key 17f on the remote controller 17. When the page selector key 17i on the remote controller 17 is operated, the electron program table can be selectively skipped vertically or horizontally for each one screen.

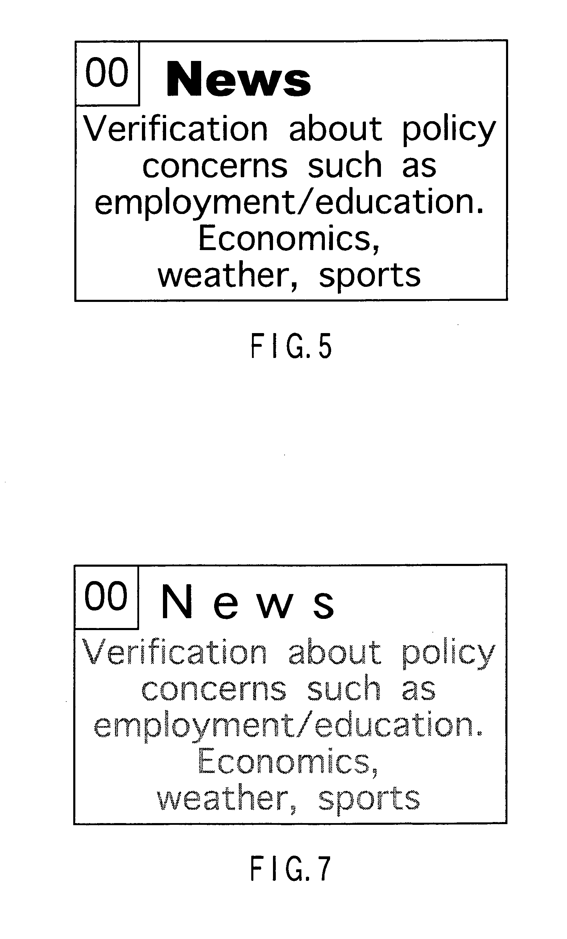

Here, it is assumed that such setting has been conducted on a setting menu through the display setting section 62e that a program name on each program column is displayed with a font different from that of a program explanatory text thereof. In this case, when the user displays the electronic program table by operating the program table key 17h on the remote controller 17, a program name "News" is highlighted with a font different from that of the explanatory text, as shown in FIG. 5.

Incidentally, FIG. 5 shows one program column on the electronic program table displayed on the video display device 14, which has been taken out from the electronic program table, where a starting time "00" of a program, a program name "News", and a program explanatory text are described on the program column.

By displaying a program name with a font designated by a user, the program name is highlighted as compared with an explanatory text thereof, so that the program table display which can be effectively and easily viewed for a user can be performed.

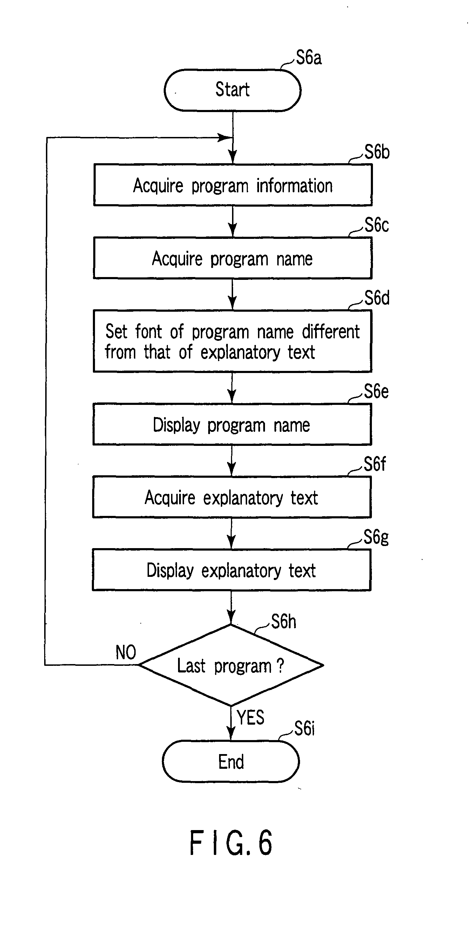

FIG. 6 is a flowchart collectively showing a display operation of an electronic program table performed when setting is performed in advance such that a program name is displayed with a font different from that of an explanatory text thereof. The display operation is started according to an operation of the program table key 17h on the remote controller 17 operated by a user (step S6a).

Thereby, the control section 62 acquires program information at step S6b, acquires a program name from the acquired program information at step S6c, and sets, to the acquired program name, a font different from that of an explanatory text at step S6d. The control section 62 displays the program name with the previously set font at step S6e.

Thereafter, the control section 62 acquires an explanatory text from the previously acquired program information at step S6f and causes the video display device 14 to display the acquired explanatory text with the original font at step S6g. The control section 62 determines whether or not the program is the last program at step S6h and when the determination is negative (NO), the control section 62 returns back to the processing at step S6b. On the other hand, when the determination is affirmative (YES), the control section 62 terminates the processing (step S6i).

By causing the video display device 14 to display the program name and the explanatory text with fonts different from each other, discrimination between the program name and the explanatory text thereof is made easy on the electronic program table.

It is assumed that such setting has been conducted on the setting menu through the display setting section 62e that the program explanatory text on each program column is displayed with a font color different from that of the program name. In the case, when a user operates the program table key 17h on the remote controller 17 to cause the video display device 14 to display the electronic program table, the program explanatory text is displayed with a font color different from that of the program name "News", as shown in FIG. 7

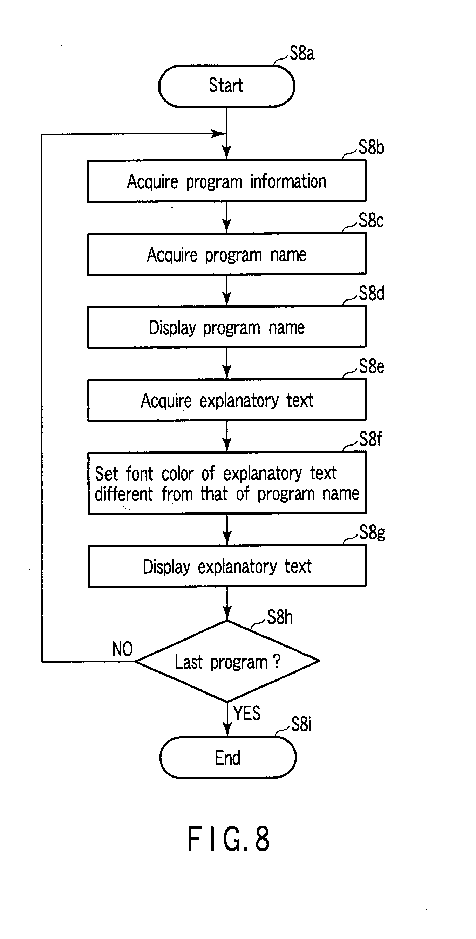

FIG. 8 is a flowchart collectively showing a display operation of the electronic program table performed when such setting has been performed in advance that a program explanatory text is displayed with a font color different from that of a program name thereof. The display operation is started according to an operation of the program table key 17h on the remote controller 17 performed by a user (step S8a).

Thereby, the control section 62 acquires program information at step S8b, acquires a program name from the acquired program information at step S8c, and causes the video display device 14 to display the acquired program name with the original font color at step S8d.

Thereafter, the control section 62 acquires an explanatory text from the previously acquired program information at step S8e, sets a font color different from that of the program name to the acquired explanatory text at step S8f, and causes the video display device 14 to display the explanatory text with the previously set font color at step S8g.

The control section 62 determines whether or not the program is the last program at step S8h and when the determination is negative (NO), the control section 62 returns back to the processing at step S8b. On the other hand, when the determination is affirmative (YES), the control section 62 terminates the processing (step S8i).

By causing the video display device 14 to display the program name and the explanatory text with font colors different from each other, discrimination between the program name and the explanatory text thereof is made easy on the electronic program table.

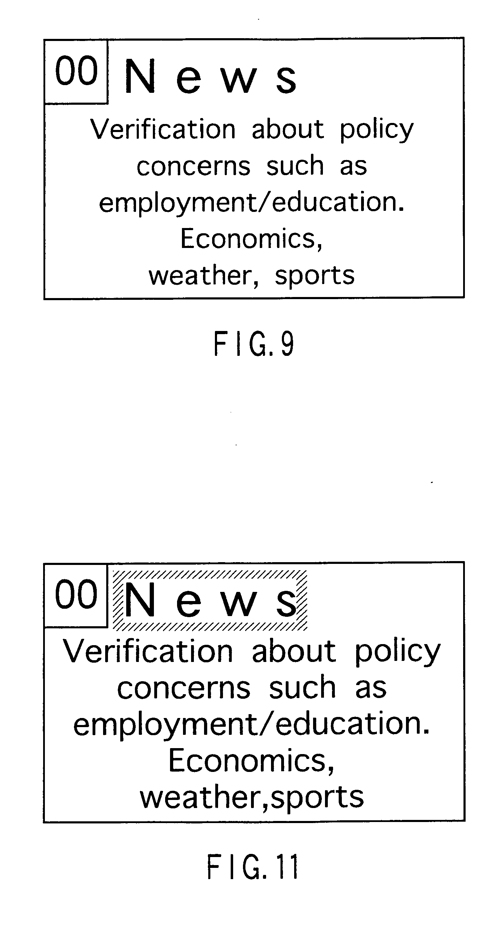

It is assumed that such setting has been performed on the setting menu displayed by the display setting section 62e that the program explanatory text on each program column is displayed with a font size different from that of the program name. In this case, when a user operates the program table key 17h on the remote controller 17 to cause the video display device 14 to display the electronic program table, the program explanatory text is displayed with a font size different from that of the program name "News", as shown in FIG. 9.

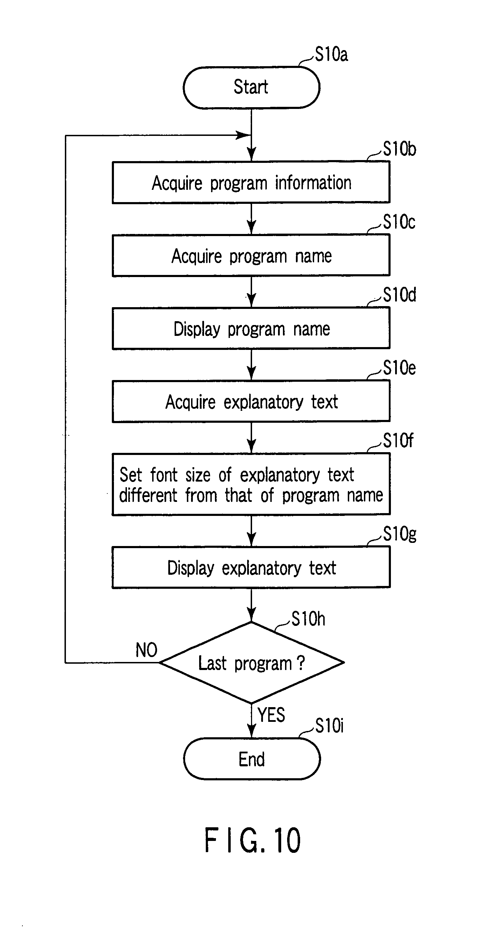

FIG. 10 is a flowchart collectively showing a display operation of the electronic program table performed when such setting has been performed in advance that a program explanatory text and a program name thereof are displayed with different font sizes. The display operation is started according to an operation of the program table key 17h on the remote controller 17 performed by a user (step S10a).

Thereby, the control section 62 acquires program information at step S10b, acquires a program name from the acquired program information at step S10c, and causes the video display device 14 to display the acquired program name with the original font size at step S10d.

Thereafter, the control section 62 acquires an explanatory text from the previously acquired program information at step S10e, sets a font size different from that of the program name to the acquired explanatory text at step S10f, and causes the video display device 14 to display the explanatory text with the previously set font size at step S10g.

The control section 62 determines whether or not the program is the last program at step S10h and when the determination is negative (NO), the control section 62 returns back to the processing at step S10b. On the other hand, when the determination is affirmative (YES), the control section 62 terminates the processing (step S10i).

By causing the video display device 14 to display the program name and the explanatory text with font sizes different from each other, discrimination between the program name and the explanatory text thereof is made easy on the electronic program table.

It is assumed that such setting has been performed on the setting menu displayed by the display setting section 62e that the font background color for the program name on each program column is displayed with a color different from that for the explanatory text. In this case, when a user operates the program table key 17h on the remote controller 17 to cause the video display device 14 to display the electronic program table, the font background color for the program name "News" is displayed with a color different from that for the explanatory text, as shown in FIG. 11.

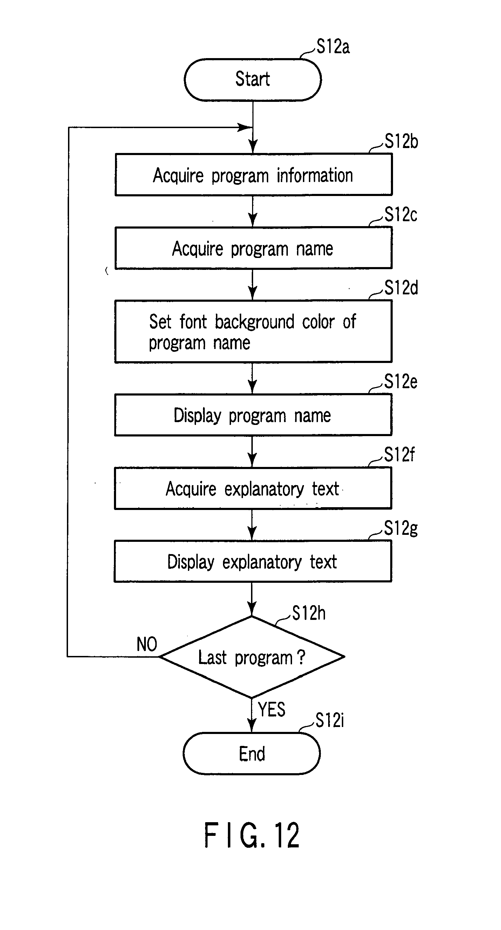

FIG. 12 is a flowchart collectively showing a display operation of the electronic program table performed when such setting has been performed in advance that a font background color for a program name is displayed with a color different from that for an explanatory text. The display operation is started according to an operation of the program table key 17h on the remote controller 17 performed by a user (step S12a).

Thereby, the control section 62 acquires program information at step S12b, acquires a program name from the acquired program information at step S12c, and sets a font background color for the acquired program name to a color different from a font background color for an explanatory text at step S12d. The control section 62 causes the video display device 14 to display the program name with the previously set font background color at step S12e.

Thereafter, the control section 62 acquires an explanatory text from the previously acquired program information at step S12f and causes the video display device 14 to display the acquired explanatory text with the original font background color at step S12g. The control section 62 determines whether or not the program is the last program at step S12h and when the determination is negative (NO), the control section 62 returns back to the processing at step S12b. On the other hand, when the determination is affirmative (YES), the control section 62 terminates the processing (step S12i).

By causing the video display device 14 to display the program name and the explanatory text with font background colors different from each other, discrimination between the program name and the explanatory text thereof is made easy on the electronic program table.

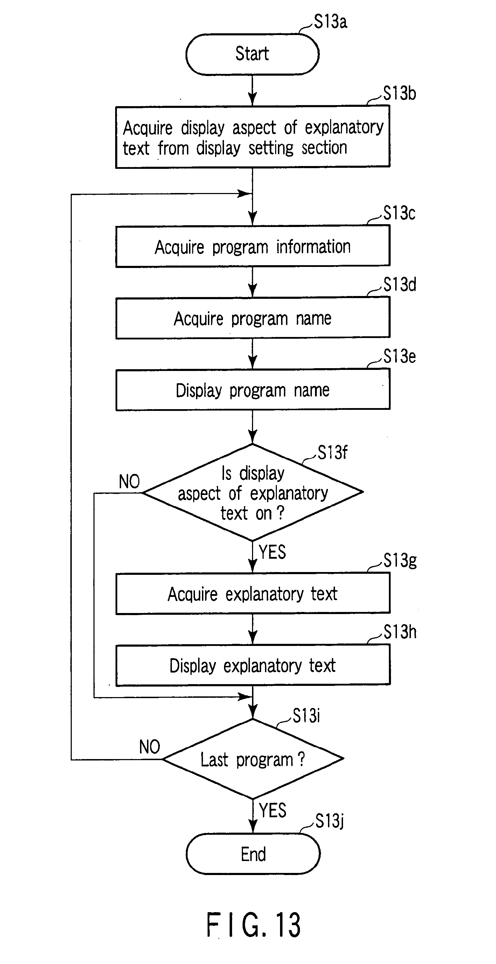

Next, FIG. 13 is a flowchart collectively showing a display operation of the electronic program table performed when a program explanatory text on each program column has been set to non-display on the setting menu displayed by the display setting section 62e. The display operation is started according to an operation of the program table key 17h on the remote controller 17 performed by a user (step S13a).

Thereby, the control section 62 acquires information indicating a display aspect of an explanatory text set by the display setting section 62e at step S13b. The control section 62 acquires program information at step S13c, acquires a program name from the acquired program information at step 13d, and causes the video display device 14 to display the acquired program name at step 13e.

Thereafter, the control section 62 determines whether or not a display aspect of the explanatory text has been set to on (display) from the information showing the display aspect of the previously acquired explanatory text at step S13f, and when the determination is negative (NO). When the determination is affirmative (YES) at step S13f, the control device 62 acquires an explanatory text from the previously acquired program information at step S13g and it causes the video display device 14 to display the acquired explanatory text at step S13h. The control section 62 determines whether or not the program is the last program at step S13i, and when the determination is negative (NO), the control section 62 returns back to the processing at the S13c. On the other hand, when the determination is affirmative (YES), the control section 62 terminates the processing (step S13j).

When it is determined at step S13f that the display aspect of the explanatory text is not on (NO at step S13f), the control section 62 determines that the explanatory text has been set to non-display, and it moves on to the processing at step S13i.

Since an unnecessary explanatory text can be set to non-display according to a setting performed by a user, the electronic program table can be made easily viable. By setting the explanatory text to non-display, it is made possible to adjust the display amount of characters. Incidentally, the case that the explanatory text is set to non-display has been explained in FIG. 13, but such control can be made that the program name is set to non-display.

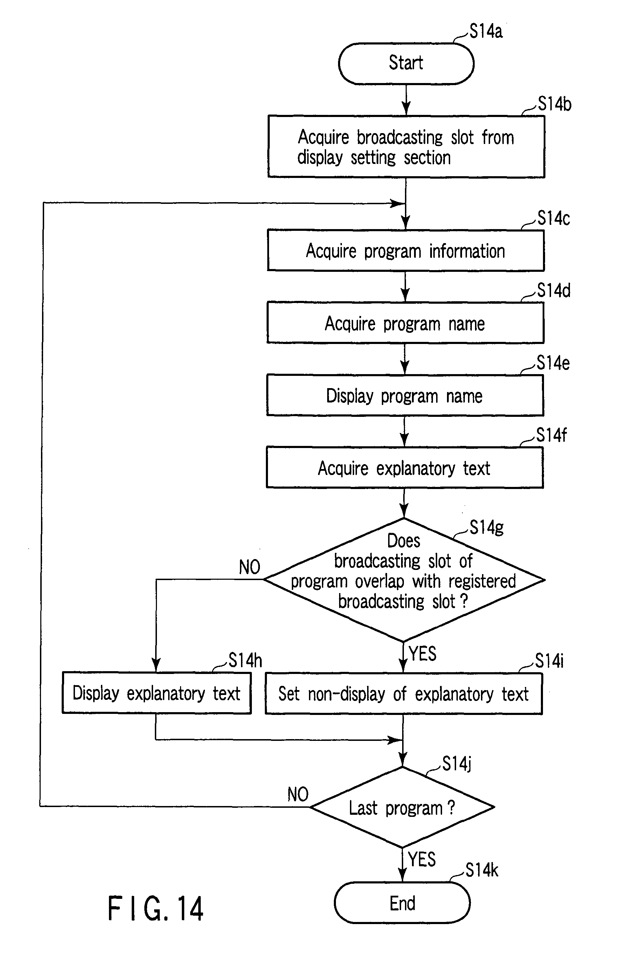

FIG. 14 is a flowchart collectively showing a display operation of the electronic program table performed when non-display setting of a program explanatory text on each program column has been performed to only a broadcasting slot set on the setting menu displayed by the display setting section 62e. The display operation is started according to an operation of the program table key 17h on the remote controller 17 performed by a user (step S14a).

Thereby, the control section 62 acquires information showing a broadcasting slot set by the display setting section 62e at step S14b. The control section 62 acquires program information at step S14c, acquires a program name from the acquired program information at step S14d, causes the video display device 14 to display the acquired program name at step S14e, and acquires an explanatory text from the previously acquired program information at step S14f.

Thereafter, the control section 62 determines whether or not a current program broadcasting slot overlaps with the broadcasting slot previously acquired from the display setting section 62e at step S14g, and when the determination is negative (NO), the control section 62 causes the video display device 14 to display the explanatory text at step S14h. On the other hand, when the determination is affirmative (YES), the control section 62 sets the explanatory text to non-display at step S14i.

After the step S14h or step S14i, the control section 62 determines whether or not the program is the last program at step S14j, and when the determination is negative (NO), the control section 62 returns back to the processing at step S14c. On the other hand, when the determination is affirmative (YES), the control section 62 terminates the processing (step S14k).

Since the explanatory text of a program on the broadcasting slot set by a user can be set to non-display, for example, an explanatory text of a program on a slot where a parent does not wish that a child watches television program, such as late-evening can be display-controlled.

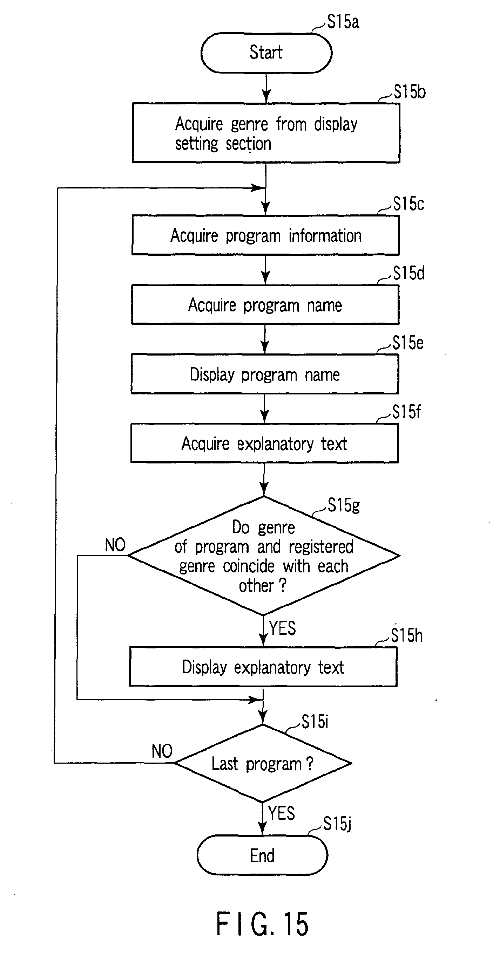

FIG. 15 is a flowchart collectively showing a display operation of the electronic program table performed when setting has been performed such that a program explanatory text on each program column is displayed only to a program of a genre set on the set menu by the display setting section 62e. The display operation is started according to an operation of the program table key 17h on the remote controller 17 performed by a user (step S15a).

Thereby, the control section 62 acquires information showing a genre set by the display setting section 62e at step S15b. The control section 62 acquires program information at step S15c, acquires a program name from the acquired program information at step S15d, causes the video display device 14 to display the acquired program name at step S15e, and acquires an explanatory text from the previously acquired program information at step S15f.

Thereafter, the control section 62 determines whether or not a genre of a program displayed on the electron program table coincides with the genre previously acquired from the display setting section 62e at step S15g. When the determination is affirmative (YES) at step S15g, the control section 62 causes the video display device 14 to display the explanatory text at step S15h. Thereafter, the control section 62 determines whether or not the program is the last program at step S15i, and when the determination is negative (NO), the control section 62 returns back to the processing at step S15c. On the other hand, when the determination is affirmative (YES), the control section 62 terminates the processing (step S15j).

When it is determined at step S15g that the genre coincides with the previously acquired genre (NO at step S15g), the control section 72 determines that the explanatory text has been set to non-display and moves on to the processing at step S15c.

Since only the explanatory text of the program of the genre set by a user can be displayed, display of the explanatory texts can be narrowed to only an explanatory text of a necessary program, so that the electronic program table can be made easily viewable.

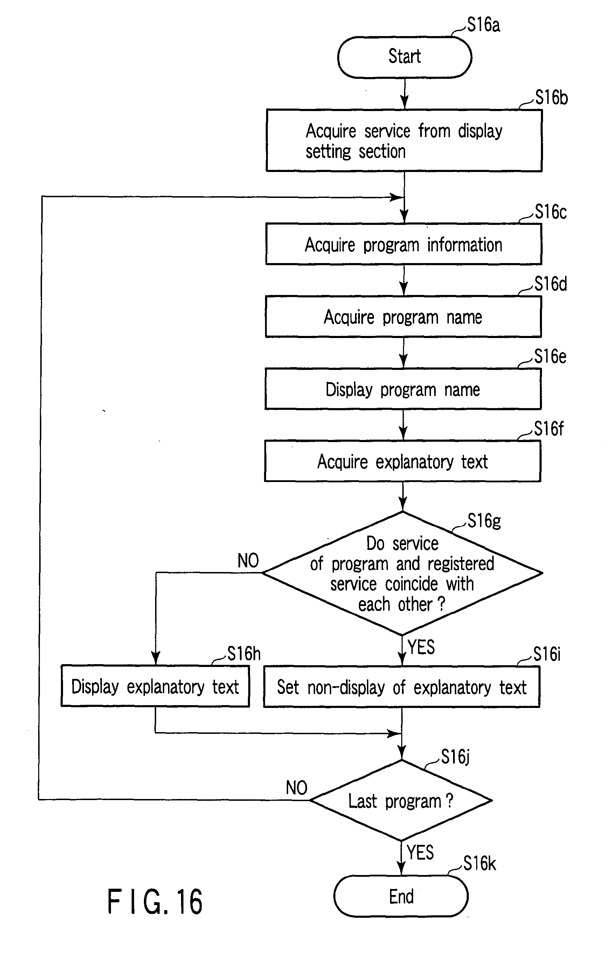

FIG. 16 is a flowchart collectively showing a display operation of the electronic program table performed when a program explanatory text on each program column has been set to non-display regarding only a program having a service coinciding with the service set on the setting menu by the display setting section 62e. The display operation is started according to an operation of the program table key 17h on the remote controller 17 performed by a user (step S16a).

Thereby, the control section 62 acquires information showing a service set on the display setting section 62e at S16b. The control section 62 acquires program information at step S16c, acquires a program name from the acquired program information at step S16d, causes the video display device 14 to display the acquired program name at step S16e, and acquires an explanatory text from the previously acquired program information at step S16f.

Thereafter, the control section 62 determines whether or not a service of a program displayed on the electronic program table coincides with the service previously acquired from the display setting section 62e at step S16g, and when the determination is negative (NO), the control section 62 causes the video display device 14 to display the explanatory text at step S16h. On the other hand, when the determination is affirmative (YES), the control section 62 sets the explanatory text to non-display at step S16i.

After the step S16h or step S16i, the control section 62 determines whether or not the program is the last program at step S16j, and when the determination is negative (NO), the control section 62 returns back to the processing at step S16c. On the other hand, when the determination is affirmative (YES), the control section 62 terminates the processing (step S16k).

Since the explanatory text of the program having a service equal to the service set by a user can be set to non-display, for example, an explanatory text of a program which a parent does not wish that a child watches can be display-controlled.

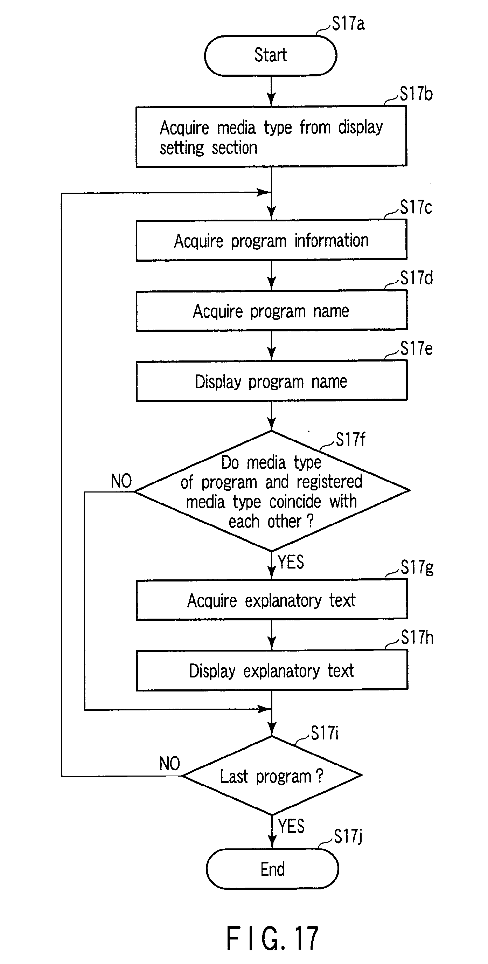

FIG. 17 is a flowchart collectively showing a display operation of the electronic program table performed when such setting has been performed that a program explanatory text on each program column is displayed regarding only a program of a media type coinciding with a media type (for example, television, radio, or the like) set on the setting menu by the display setting section 62e. The display operation is started according to an operation of the program table key 17h on the remote controller 17 performed by a user (step S17a).

Thereby, the control section 62 acquires information showing a media type set by the display setting section 62e at step S17b. The control section 62 acquires program information at step S17c, acquires a program name from the acquired program information at step S17d, and causes the video display device 14 to display the acquired program name at step S17e.

Thereafter, the control section 62 determines whether or not a media type of a program displayed on the electronic program table coincides with the media type previously acquired from the display setting section 62e at step S17f. When the determination is affirmative at step S17f (YES), the control section 62 acquires an explanatory text from the previously acquired program information at step S17g and causes the video display device 14 to display the acquired explanatory text at step S17h. The control section 62 determines whether or not the program is the last program at step S17i, and when the determination is negative (NO), the control section 62 returns back to the processing at step S17c. On the other hand, when the determination is affirmative (YES), the control section 62 terminates the processing (step S17j).

When it is determined at step S17f that the media type does not coincide with the previously acquired media type (NO at step S17f), the control section 62 determines that the explanatory text has been set to non-display, and moves on to the processing at step S17i.

Since only the explanatory text of a program of the media type set by a user is displayed, the electronic program table is made easily viewable.

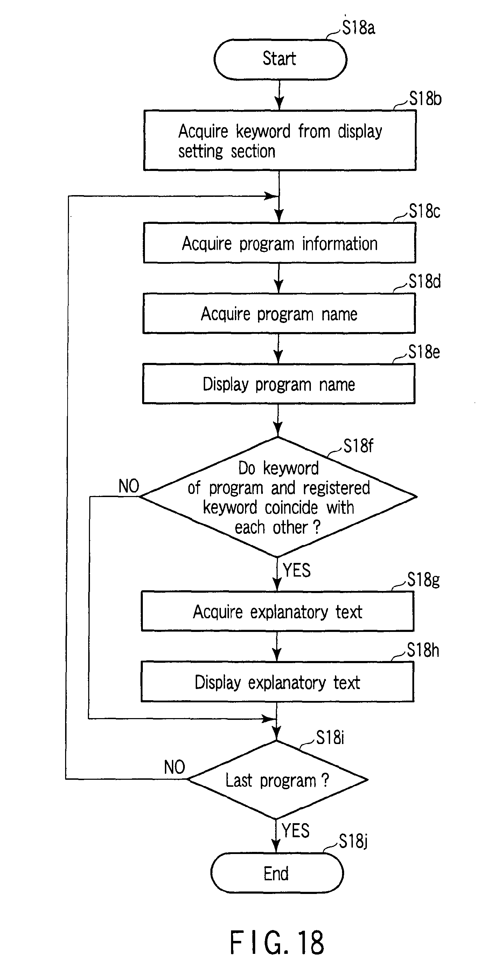

FIG. 18 is a flowchart collectively showing a display operation of the electronic program table performed when setting has been performed such that a program explanatory text on each program column is displayed regarding only a program having a keyword coincident with a keyword set on the setting menu by the display setting section 62e. The display operation is started according to an operation of the program table key 17h on the remote controller 17 performed by a user (step S18a).

The control section 62 acquires information showing a keyword set on the display setting section 62e at step S18b. The control section 62 acquires program information at step S18c, acquires a program name from the acquired program information at step S18d, and causes the video display device 14 to display the acquired program name at step S18e.

Thereafter, the control section 62 determines whether or not a keyword of a program displayed on the electronic program table coincides with the keyword previously acquired from the display setting section 62e at step S18f. When the determination is affirmative at step S18f (YES), the control section 62 acquires an explanatory text from the previously acquired program information at step S18g, and it causes the video display device 14 to display the acquired explanatory text at step S18h. The control section 62 determines whether the program is the last program at step S18i, and when the determination is negative (NO), the control section 62 returns back to the processing at step S18c. On the other hand, when the determination is affirmative (YES), the control section 62 terminates the processing (step S18j).

When it is determined at step S18f that the keyboard does not coincide with the previously acquired keyboard (NO at step S18f), the control section 62 determines that the explanatory text has been set to non-display, and moves on to the processing at step S18i.

Since only the explanatory text of a program including the keyword set by a user is displayed, only explanation which a user wishes to know can be acquired easily.

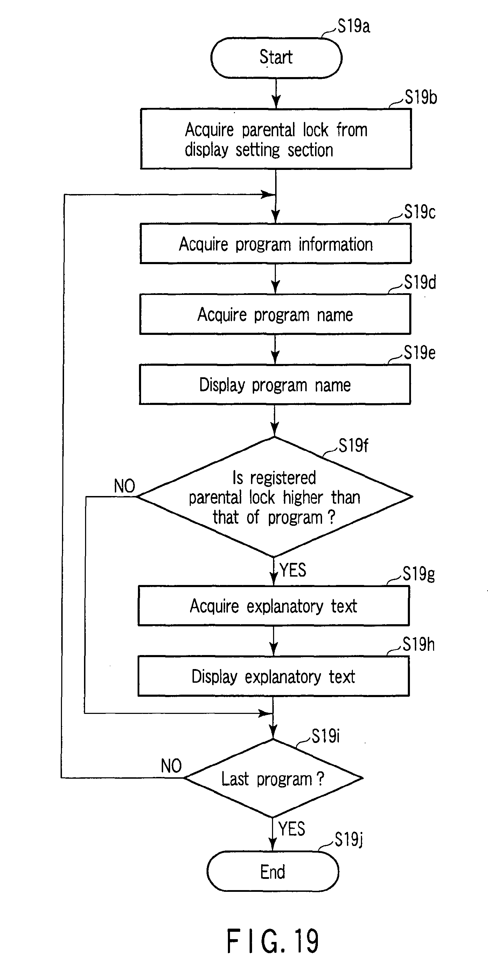

FIG. 19 is a flowchart collectively showing a display operation of the electronic program table performed when setting has been performed such that, when a parental lock set on the setting menu by the display setting section 62e is higher than a parental lock attached to a program, a program explanatory text on each program column is displayed regarding only the program. The display operation is started according to an operation of the program table key 17h on the remote controller 17 performed by a user (step S19a).

Thereby, the control section 62 acquires information showing a parental lock set on the display setting section 62e at step S19b. The control section 62 acquires program information at step S19c, acquires a program name from the acquired program information at step S19d, and causes the video display device 14 to display the acquired program name at step S19e.

Thereafter, the control section 62 determines whether or not the parental lock acquired from the display setting section 62e is higher than a parental lock attached to a program displayed on the electronic program table in advance at step S19f. When the determination is affirmative at step S19f (YES), the control section 62 acquires an explanatory text from the previously acquired program information at step S19g, and causes the video display device 14 to display the acquired explanatory text at step S19h. The control section 62 determines whether or not the program is the last program at step S19i, and when the determination is negative (NO), the control section 62 returns back to the processing at step S19c. On the other hand, when the determination is affirmative (YES), the control section 62 terminates the processing (step S19j).

When it is determined at step S19f that the parental lock is not higher than the parental lock attached to the program (NO at step S19f), the control section 62 determines that the explanatory text has been set to non-display and moves on to the processing at step S19i.

Since only when the parental lock set by a user is higher than a parental lock attached to a program, the explanatory text of the program is displayed, an explanatory text of a program which a parent does not wish that a child watch according to a parental lock can be display-controlled.

## Claims

1. A program table displaying apparatus **characterized by** comprising:
an acquiring section (23, 43, 49) configured to acquire program information;
a preparing section (62) configured to prepare an electronic program table describing a program name and an explanatory text thereof for each program based upon the program information acquired by the acquiring section (23, 43, 49);
a setting section (62e) configured to set a display aspect for one of the program name and the explanatory text thereof to the electronic program table prepared by the preparing section (62); and
a displaying section (14, 55, 58, 59, 62) configured to display the electronic program table prepared by the preparing section (62) based upon the display aspect set by the setting section (62e) such that the program name and the explanatory text thereof are displayed different in display aspect.

2. The program table displaying apparatus according to claim 1, **characterized in that**
the setting section (62e) sets, to one of the program name and the explanatory text, one of a font, a font color, a font size, and a font background color different from that of the other of the program name and the explanatory text.

3. The program table displaying apparatus according to claim 1, **characterized in that**
the setting section (62e) performs setting such that one of the program name and the explanatory text thereof is non-display.

4. The program table displaying apparatus according to claim 3, **characterized in that**
the setting section (62e) sets one of a broadcasting slot of the program, a genre of the program, a service which the program owns, a media type of the program, a keyword of the program, and a parental lock attached to the program name as a condition for setting one of the program and the explanatory text thereof to non-display.

5. A broadcast receiver **characterized by** comprising:
a receiving section (42, 43, 48, 49) configured to receive a broadcast signal;
a signal processing section (44 to 47, 50 to 55, 58, 59) configured to extract a signal on a desired channel from the broadcast signal received by the receiving section (42, 43, 48, 49) to perform a predetermined signal processing to the extracted signal, thereby generating a video signal;
an output section (60) configured to output the video signal obtained by the signal processing section (44 to 47, 50 to 55, 58, 59);
an acquiring section (23, 43, 49) configured to acquire program information;
a preparing section (62) configured to prepare an electronic program table describing a program name and an explanatory text thereof for each program based upon the program information acquired by the acquiring section (23, 43, 49);
a setting section (62e) configured to set a display aspect for one of the program name and the explanatory text thereof to the electronic program table prepared by the preparing section (62); and
a display section (14, 55, 58, 59, 62) configured to display the electronic program table prepared by the preparing section (62) based upon the display aspect set by the setting section (62e) such that the program name and the explanatory text thereof are displayed different in display aspect.

6. A program table displaying method **characterized by** comprising:
acquiring program information (23, 43, 49);
preparing an electronic program table describing a program name and an explanatory text thereof for each program based upon the acquired program information (62);
setting a display aspect for one of the program name and the explanatory text thereof to the prepared electronic program table (62e); and
displaying the prepared electronic program table based upon the set display aspect such that the program name and the explanatory text thereof are displayed different in display aspect (14, 55, 58, 59, 62).

7. The program table displaying method according to claim 6, **characterized in that**
setting (62e) performs setting one of a font, a font color, a font size, and a font background color for one of the program name and the explanatory text thereof to be different from that of the other of program name and the explanatory text thereof.

8. The program table displaying method according to claim 6, **characterized in that**
setting (62e) performs setting such that one of the program name and the explanatory text thereof is non-display.

9. The program table displaying method according to claim 8, **characterized in that**
setting (62e) sets one of a broadcasting slot of the program, a genre of the program, a service which the program owns, a media type of the program, a keyword of the program, and a parental lock attached to the program as a condition for setting one of the program and the explanatory text to non-display.
